# EUROPÄISCHE PATENTSCHRIFT

(11) **EP 1 564 503 B1**
(45) Veröffentlichungstag und Bekanntmachung des Hinweises auf die Patenterteilung: **26.12.2007**
(21) Anmeldenummer: 04002958.9
(22) Anmeldetag: 10.02.2004
(51) Int. Cl.: F24H 3/04, B60H 1/22

(54) **Elektrische Heizvorrichtung für niedrige Bauhöhen**
Electical heating device of low height
Dispositif de chauffage électrique de faible hauteur

(43) Veröffentlichungstag der Anmeldung: 17.08.2005
(73) Patentinhaber: Catem GmbH & Co. KG, 76863 Herxheim bei Landau (DE)
(72) Erfinder: Bohlender, Franz, 76870 Kandel (DE); Zeyen, Michael, 76819 Landau/Queichheim (DE); Niederer, Michael, 76889 Kapellen-Drusweiler (DE)
(74) Vertreter: Grünecker, Kinkeldey, Stockmair & Schwanhäusser Anwaltssozietät

(56) Entgegenhaltungen:
- DE-A- 19 911 547
- US-A- 5 057 672
- US-A- 5 256 857

## Beschreibung

Die vorliegende Erfindung betrifft eine elektrische Heizvorrichtung, insbesondere als Zusatzheizung für ein Kraftfahrzeug, mit einem Gehäuse, in dem ein Schichtaufbau aus wenigstens einem Radiatorelement, wenigstens einem wärmeabgebenden Element mit wenigstens einem PTC-Heizelement und wenigstens ein den Schichtaufbau unter Vorspannung haltendes Federelement aufgenommen ist und in dem mehrere elektrisch mit dem wenigstens einen PTC-Heizelement verbundene Kontakte isoliert gehalten sind.

Eine solche elektrische Heizvorrichtung ist z.B. aus Dokument US 5 256 857 bekannt.

Die vorliegende Erfindung betrifft ferner ein Verfahren zum Herstellen einer elektrischen Heizvorrichtung der vorstehend genannten Art.

Für den Einsatz in Kraftfahrzeugen, insbesondere Kraftfahrzeugen mit neuen, verbrauchsoptimierten Motoren, in denen eine geringere Menge an Wärmeenergie anfällt, werden elektrische Zusatzheizungen zur Beheizung von Innenraum und Motor verwendet. Solche elektrischen Heizvorrichtungen sind jedoch auch für andere Einsatzzwecke geeignet, beispielsweise im Bereich von Hausinstallationen, insbesondere Raumklimatisierung, in Industrieanlagen und dergleichen.

Für eine solche elektrische Zusatzheizung für ein Kraftfahrzeug werden vorzugsweise PTC-Heizelemente mit Wellrippen in wärmeleitender Verbindung verwendet. Die von den PTC-Heizelementen erzeugte Wärme wird über die Wellrippen an durch einen Luftführungskanal strömende Luft abgegeben. Die Gesamtanordnung aus einem geschichteten Aufbau von PTC-Heizelementen, Radiatorelementen und Kontaktblechen zur Stromzuführung ist zur Erhöhung des Wirkungsgrads der Heizung in einer Klemmpressung in einem Rahmen gehalten. Durch die Klemmung wird eine hohe elektrische und thermische Kontaktierung in den PTC-Heizelementen erreicht. Die Gegenfläche für die PTC-Heizelemente wird hierbei entweder beispielsweise durch Blechbänder gebildet, die vorzugsweise parallel zueinander unter Einschluss von einem oder mehreren PTC-Heizelementen verlaufend angeordnet sind und zusammen mit den dazwischen angeordneten PTC-Heizelementen ein wärmeabgebendes Element bilden. Diese Ausgestaltung wird insbesondere bevorzugt bei einem Schichtaufbau mit einem aus einem mäandrierenden Blechband gebildeten Radiatorelement, d.h. einem Wellrippen-Radiatorelement. Alternativ kann die ebene Anlagefläche für die PTC-Heizelemente auch durch die Außenfläche eines stranggepressten Aluminiumprofils gebildet sein, welches das Radiatorelement ausbildet. Bei dieser Ausführungsform können die Außenflächen der stranggepressten Aluminiumprofile als Teil des wärmeabgebenden Elementes angesehen werden. Bei beiden Alternativen sind die Anlageflächen für die PTC-Heizelemente elektrisch leitend ausgestaltet und elektrisch mit den in dem Gehäuse gehaltenen Kontakten verbunden. Bei dem erstgenannten Ausführungsbeispiel werden die Kontakte regelmäßig durch freiliegende Enden der Blechbänder gebildet.

Der geschichtete Aufbau ist in einem stabilen Rahmen mit vorzugsweise U-förmigem Querschnitt gehalten. Vorzugsweise ist der Rahmen so ausgebildet, dass er den geschichteten Aufbau unter Vorspannung hält. Die Klemmung kann alternativ durch Federelemente bewirkt werden, die in dem geschichteten Aufbau angeordnet sind. Damit der Rahmen die Federkräfte aufnehmen kann, ist er mechanisch besonders stabil, vorzugsweise mit einem U-förmigen Querschnitt ausgebildet. Eine solche herkömmliche Heizvorrichtung ist beispielsweise aus DE-A-101 21 568 bekannt, die als Gattung angesehen werden kann.

Die Mindesthöhe der Längsholme eines solchen Rahmens mit U-förmigem Querschnitt (oder C-förmigem Querschnitt gemäß DE-A-101 21 568) beträgt bei den erforderlichen Klemmkräften in etwa 11 mm. Dadurch ergibt sich für die gesamte Heizvorrichtung eine für den Luftdurchlass nicht nutzbare Höhe von mindestens 22 mm. Eine solche Bauform mit außen liegender Klemmung bzw. außen liegendem Halterahmen weist somit einen hohen Flächenanteil auf, der nicht für den Luftdurchsatz nutzbar ist. Aus diesem Grund sind solche elektrischen Heizvorrichtungen zur Verwendung bei sehr geringen Einbauhöhen nicht geeignet.

Beim Zusammenbau elektrischer Heizvorrichtungen mit außen liegendem Halterahmen bzw. außen liegender Klemmung sind ferner aufwendige Maßnahmen erforderlich, die den beim Zusammenbau hinderlichen Andruckkräften der Feder(n)/des Rahmens entgegenwirken.

Aufgrund dieser Nachteile sind Heizvorrichtungen mit einem herkömmlichen Halterahmen für moderne Heizklimageräte, insbesondere für den Einbau in Kraftfahrzeuge, in immer geringerem Maße geeignet. Heizklimageräte für Mehrzonenklimatisierung in einem komfortbetonten Kraftfahrzeug erfordern zunehmend Heizvorrichtungen großer Länge, aber geringer Bauhöhe.

Außerdem weisen herkömmliche Konstruktionen mit einem Halterahmen, insbesondere aus Metall, ein hohes Gewicht auf. Für den Einbau in Kraftfahrzeuge ist es jedoch im Hinblick auf das Gesamtgewicht des Fahrzeugs wünschenswert, elektrische Zusatzheizungen mit einem besonders niedrigen Gewicht verwenden zu können.

Ein weiterer Nachteil von Metallhalterahmen liegt in ihrer leitenden Oberfläche. Um die Sicherheit in Kraftfahrzeugen zu erhöhen, werden Metalloberflächen in zunehmenden Maße vermieden, damit ihre Berührung gefahrlos möglich ist, d.h. ohne elektrische oder thermische Leitung. Dazu werden die oben beschriebenen Heizvorrichtungen vorzugsweise mit einer Umhüllung aus Kunststoff versehen, wie beispielsweise bei der in DE-A-101 21 568 dargestellten Heizvorrichtung.

Besondere Probleme bereitet im Übrigen eine fertigungstechnisch sinnvolle Ausgestaltung der elektrischen Heizvorrichtung, die die Anordnung des Schichtaufbaus unter Vorspannung auf einfache Weise ermöglicht. So wird gemäß der DE-1 01 21 568 vorgeschlagen, das Gehäuse durch zwei Längs- und zwei Querschenkel derart auszubilden, dass die Querschenkel an ihren Enden Umfassungsabschnitte aufweisen, mit denen sie die korrespondierenden Enden der Längsschenkel in Querrichtung nach Außen sichernd umfassen. Bei dieser Ausgestaltung werden die Längsschenkel zunächst an einem der Querschenkel in die an diesen Querschenkeln ausgebildeten Umfassungsabschnitte eingesetzt und nach Art einer scherenförmigen Bewegung aufeinander zu und um die Umfassungsabschnitte geschwenkt. Hierbei wird die in dem Schichtaufbau enthaltende Feder komprimiert. Die anderen Enden der Längsschenkel werden nun in die an dem weiteren Querschenkel ausgebildeten Umfassungsabschnitte eingeschoben. Das rahmenförmige Gehäuse ist damit geschlossen und der Schichtaufbau ist unter Vorspannung gehalten. Dieser vorbekannte Lösungsansatz ist insofern nachteilig, als dass die Montage des Schichtaufbaus unter Vorspannung erfolgt. Die einzelnen Elemente des Schichtaufbaus müssen dementsprechend sicher bei der Montage in Position gehalten werden.

Bei einem aus der DE 197 06 199 vorbekannten Lösungsansatz wird das Gehäuse durch einen Kunststoffrahmen gebildet, dessen Längsschenkel zur Innenseite hin eine leichte Konvexität aufweisen. Das rahmenförmige Gehäuse ist aus einem Thermoplasten geformt. Die konvex nach innen gebogenen Längsschenkel des rahmenförmigen Gehäuses bilden die Federelemente im Sinne der Erfindung aus und komprimieren den in dem Gehäuse gehaltenen Schichtaufbau. Der Schichtaufbau umfasst bei diesem vorbekannten Lösungsvorschlag Blechbänder mit dazwischen angeordneten PTC-Heizelementen und sich hierzu parallel erstreckende Radiatorelemente, die durch mäandrierende gebogene Blechstreifen gebildet sind. Bei der Montage der vorbekannten Heizvorrichtung müssen die Längsschenkel gespreizt werden. Der hiernach zur Verfügung stehende Montageraum ist relativ begrenzt, was die Montage zusätzlich erschwert.

Nach einem alternativen, ebenfalls aus der DE 197 06 199 bekannten Lösungsvorschlag wird das Gehäuse durch einen zweiteiligen Rahmen aus einem thermoplastischen Material gebildet, der eine Teilungsebene aufweist, die quer zu den Querschenkeln und quer zu der durch den Rahmen aufgespannten Ebene liegt. Die beiden Rahmenteile sind in Richtung der Querschenkel aufeinander zu beweglich und bei Beendigung der Montage über Federelemente gegeneinander verspannt, welche die Querschenkelstümpfe beider Rahmenteile unter Vorspannung gegeneinander fixieren. Der zweite Lösungsvorschlag der DE 197 06 199 konnte sich in der Praxis nicht durchsetzen, da der Aufbau des rahmenförmigen Gehäuses relativ aufwendig ist. Darüber hinaus werden die Federelemente an der Außenseite des Gehäuses auf Zug belastet und können die im Hinblick auf einen guten thermischen und insbesondere elektrischen Kontakt der PTC-Heizelemente mit der Anlagefläche erforderliche Anpresskraft nicht mit der nötigen Sicherheit bei der gegebenen langen Nutzungszeit der elektrischen Heizvorrichtung gewährleisten.

Der vorliegenden Erfindung liegt das Problem zugrunde, eine Heizvorrichtung der eingangs genannten Art anzugeben, deren Schichtaufbau leichter an dem Gehäuse montiert werden kann. Darüber hinaus liegt der vorliegenden Erfindung das Problem zugrunde, ein einfaches Verfahren zur Herstellung einer elektrischen Heizvorrichtung der eingangs genannten Art anzugeben.

Zur Lösung des vorrichtungsmäßigen Problems wird mit der vorliegenden Erfindung vorgeschlagen, die eingangs genannte elektrische Heizvorrichtung dahingehend weiterzubilden, dass das Gehäuse ein Gehäuseunterteil mit wenigstens einem Vorspannelement umfasst, welches zur Aufprägung der Vorspannung in einer Richtung in etwa rechtwinklig zu der Ebene des Schichtaufbaus in das Gehäuseunterteil einbringbar und in einer Einbaulage gegenüber diesem festlegbar ist.

Bei der erfindungsgemäßen elektrischen Heizvorrichtung weist das Gehäuse ein Gehäuseunterteil auf, welches sich zur Aufnahme des Schichtaufbaus eignet. Die Teile des Schichtaufbaus, nämlich das zumindest eine wärmeabgebende Element sowie ein oder mehrere sich hierzu parallel erstreckende Radiatorelemente, werden zunächst ohne Vorspannung in das Gehäuseunterteil eingelegt. Auch werden die elektrischen Verbindungen zwischen den PTC-Heizelementen und den Kontakten vorbereitet. Mitunter werden die Kontakte unmittelbar an dem Gehäuseunterteil befestigt, gegebenenfalls als Teil von sich parallel zu den Radiatorelementen erstreckenden Blechbändern. Der Schichtaufbau kann ferner ein oder mehrere zunächst ohne Vorspannung in das Gehäuseunterteil eingelegte Federelemente aufweisen. Alternativ ist es möglich, die Feder als Teil des Gehäuses an sich parallel zu den Elementen des Schichtaufbaus erstreckenden Gehäuseabschnitten auszubilden und/oder vorzusehen. Die den Schichtaufbau ausbildenden Elemente sind danach mit geringem Spiel in der Ebene des Schichtaufbaus in dem Gehäuseunterteil gehalten. Die Teile des Schichtaufbaus werden also in das Gehäuseunterteil eingelenkt, ohne dass Teile des Gehäuses unter Vorspannung gehalten werden müssen oder aber die Teile des Schichtaufbaus im vormontierten Zustand unter Vorspannung gehalten werden müssen, um diese von dem Gehäuse zu umschließen.

Nachdem sämtliche Teile des Schichtaufbaus in das Gehäuseunterteil eingesetzt worden sind, wird wenigstens ein Verdränger in das Gehäuseunterteil eingebracht, und zwar in einer Richtung in etwa rechtwinklig zu der Ebene des Schichtaufbaus. Durch Einbringen des Verdrängers in das Gehäuseunterteil wird das Spiel zwischen den einzelnen Elementen des Schichtaufbaus verdrängt und das wenigstens eine Federelement, welches Teil des Schichtaufbaus sein kann oder durch unmittelbare Aufnahme in einem Teil des Gehäuses in diesem aufgenommen ist, unter Vorspannung gesetzt. In seiner gegenüber dem Gehäuse festgelegten Einbaulage verspannt der Verdränger dementsprechend das oder die Federelemente gegen die Elemente des Schichtaufbaus.

Im Hinblick auf eine einfache Vorspannung des Schichtaufbaus beim Einbringen des Vorspannelementes ist der Verdränger vorzugsweise keilförmig ausgebildet. Die vordere, beim Einbringen des Verdrängers in den Schichtaufbau bzw. zwischen den Schichtaufbau und das Gehäuse eindringende Spitze des keilförmig ausgebildeten Verdrängers hat dabei eine solche Breite, dass der Verdränger zunächst ohne Vorspannung aufzubringen in das Gehäuseunterteil eingebracht werden kann. Die Keilform des Verdrängers wird so gewählt, dass am Ende der Einbringbewegung, d.h. bei Erreichen der Einbaulage, der Schichtaufbau mit der nötigen Vorspannung gehalten ist.

Im Hinblick auf eine möglichst gute Widerlagerung der Vorspannkräfte des Schichtaufbaus wird gemäß einer weiteren bevorzugten Ausgestaltung vorgeschlagen, dass der Verdränger einen in der Einbaulage bis in die Ebene des Schichtaufbaus ragenden Steg umfasst. Bei dieser bevorzugten Weiterbildung der erfindungsgemäßen Heizvorrichtung werden die durch den Verdränger eingebrachten Vorspannkräfte im Wesentlichen in der Ebene des Schichtaufbaus in diesen eingebracht. Da der Schichtaufbau in dem Gehäuseunterteil eingelegt ist, werden die von dem Verdränger eingebrachten Vorspannkräfte von dem Gehäuseunterteil sicher widergelagert und durch Formschluss gehalten. Es ist somit nicht zu befürchten, dass sich die Vorspannung des Schichtaufbaus auch bei längerer Benutzung der elektrischen Heizvorrichtung durch Setzbeträge oder dergleichen entspannt.

Gemäß einer weiteren bevorzugten Ausgestaltung der vorliegenden Erfindung ist das Federelement an wenigstens einem Rand des Schichtaufbaus vorgesehen und der Steg hat wenigstens eine sich in Einbringrichtung verjüngende und mit dem Federelement zusammenwirkende Ablauframpe. Diese Ausgestaltung ermöglicht die planparallele Anordnung der den Schichtaufbau bildenden Bestandteile Radiatorelement und wärmeabgebendes Element. Diese sich in Längsrichtung des Gehäuses erstreckenden Elemente haben eine im Wesentlichen rechtwinklige Querschnittsform. Bei der bevorzugten Ausgestaltung kann insbesondere die durch die keilförmige Verdrängerform erzeugte Abweichung von einer planparallelen Anordnung sich gegenüberliegender Anlageflächen durch das Federelement kompensiert werden. Die bevorzugte Weiterbildung hat ferner den Vorteil, dass das Federelement, welches für sich nichts zu der Heizwirkung beiträgt, am Rand des Schichtaufbaus angeordnet ist und ganz oder teilweise in dem Gehäuse aufgenommen werden kann. Die bevorzugte Weiterbildung erlaubt danach einen kompakten Aufbau der elektrischen Heizvorrichtung, was insbesondere bei der Benutzung der Heizvorrichtung unter beengten Bedingungen, beispielsweise in dem Sitz oder der H-Säule eines Kraftfahrzeuges zur Belüftung des Fonds oder im Bereich der Kopfstützen zu bevorzugen ist.

Im Hinblick auf eine möglichst gute Übertragung der in dem Schichtaufbau eingebrachten Vorspannung ist es zu bevorzugen, dass die der Ablauframpe abgewandte Rückseite des Steges in Einbaulage an dem Gehäuseunterteil anliegt.

Zur lagegenauen Positionierung der PTC-Heizelemente und im Hinblick auf eine sichere Isolation von mehreren, in Längsrichtung hintereinander an einem wärmeabgebenden Element vorgegebenen PTC-Heizelementen ist es zu bevorzugen, an dem Gehäuseunterteil Positioniermittel vorzusehen, mit denen das bzw. die PTC-Heizelemente vorfixiert werden.

Mit Rücksicht auf eine unverlierbare Sicherung des Schichtaufbaus in dem Gehäuse wird gemäß einer weiteren bevorzugten Ausgestaltung der vorliegenden Erfindung vorgeschlagen, den Verdränger an einem Gehäuseoberteil anzuordnen, welches den Schichtaufbau oberseitig fasst. Dass den Schichtaufbau oberseitig fassende Gehäuseoberteil übergreift alle oder einzelne Elemente des Schichtaufbaus an der dem Gehäuseteil abgewandten Oberseite. Die Unterseite des Schichtaufbaus liegt vorzugsweise an einem mit einer oder mehreren Öffnungen versehenen Boden an. Durch diese bevorzugte Ausgestaltung ist der Schichtaufbau in dem Gehäuse zwischen dessen Unterteil und dessen Oberteil unverlierbar gehalten und positioniert. Im Hinblick auf eine möglichst biegesteife Ausgestaltung der Längsseiten des Gehäuses ist es zu bevorzugen, an dem Gehäuseunterteil und/oder dem Gehäuseoberteil sich über den Schichtaufbau erstreckende Versteifungsstreben vorzusehen. Diese Versteifungsstreben liegen vorzugsweise in Einbaulage gegen die stirnseitigen Endflächen der Elemente des Schichtaufbaus an und fixieren diese in ihrer Lage.

Im Hinblick auf einen möglichst ungehinderten Durchtritt von zu erwärmender Luft durch die Radiatorelemente ist es weiterhin zu bevorzugen, die Versteifungsstreben fluchtend zu den wärmeabgebenden Elementen auszurichten. Die benachbart zu den wärmeabgebenden Elementen vorgesehenen Radiatorelemente liegen dementsprechend gegenüber den an dem Gehäuseunterteil und dem Gehäuseoberteil ausgesparten Luftdurchtrittöffnungen frei. Dadurch, dass die Versteifungsstreben im Wesentlichen in der Breite der wärmeabgebenden Elemente ausgeformt sind, wie dies mit einer weiteren bevorzugten Ausgestaltung der vorliegenden Erfindung vorgeschlagen wird, kann der ungehinderte Luftdurchtritt durch die elektrische Heizvorrichtung weiter verbessert werden. Die vorerwähnten Versteifungsstreben erstrecken sich gemäß den vorerwähnten bevorzugten Ausgestaltungen lediglich in Längsrichtung der Radiatorelemente. Sofern die erfindungsgemäße Heizvorrichtung jedoch als besonders leistungsfähige, große Heizvorrichtung ausgestaltet wird, können sich Versteifungsstreben auch gitterförmig über die an dem Gehäuseunter- und dem Gehäuseoberteil ausgesparten Öffnungen erstrecken.

Im Hinblick auf eine möglichst einfache Montage wird gemäß einer weiteren bevorzugten Ausgestaltung der vorliegenden Erfindung vorgeschlagen, dass das Gehäuseunterteil und das Gehäuseoberteil miteinander verrastet sind. Zweckmäßigerweise und im Hinblick auf eine möglichst gute Rückstellkraft der die Rastverbindung bewirkenden Elemente ist hierzu an dem freien Ende des Verdrängers eine Rastnase ausgebildet, die in der Einbaulage mit dem Gehäuse zusammenwirkt. Die Rastnase ist im Hinblick auf eine möglichst glatte äußere Anlagefläche in Einbaulage in dem Gehäuse aufgenommen. Hierzu wird gemäß einer bevorzugten Weiterbildung der vorliegenden Erfindung vorgeschlagen, dass die Gegenfläche, an welche die Rastnase in der Einbaulage anliegt, nach innen versetzt an dem Gehäuseunterteil ausgebildet ist.

Zweckmäßigerweise wird zur Verringerung der Herstellungskosten der elektrischen Heizvorrichtung vorgeschlagen, dass das Federelement aus einem Blechteil mit aus diesem herausragenden Federsegmenten besteht. Ein derartiges Federelement kann kostengünstig durch Stanzbearbeitung gefertigt werden.

Um eine unerwünschte Verschiebung der Elemente des Schichtaufbaus beim Einbringen des Verdrängers zu verhindern, wird gemäß einer weiteren bevorzugten Ausgestaltung vorgeschlagen, dass die Federsegmente in Einbringrichtung beweglich an dem Blechteil gehalten sind. Beim Vorspannen der Feder, d.h. Einbringen des Verdrängers in das Gehäuseunterteil zurückgelegte Federwege können bei dieser Ausgestaltung in Einbringrichtung ausgeglichen werden. Die obigen Anforderungen werden zweckmäßigerweise durch ein Federelement erfüllt, welches Federsegmente aufweist, die durch in Einbringrichtung gewölbte und einseitig mit dem Blechstreifen verbundene Stanzteile ausgeformt sind. Die Federsegmente sind hierbei einstückig an dem Federelement ausgeformt, welches durch einfache Stanzbearbeitung kostengünstig hergestellt und als einteiliges Bauteil mit geringem Handhabungs- und Positionieraufwand in das Gehäuse eingebracht werden kann.

Mit Rücksicht auf die gute flächige Anlage und eine hohe Anpresskraft zwischen dem PTC-Heizelementen und ihren benachbarten Anlageflächen wird gemäß einer weiteren bevorzugten Ausgestaltung der vorliegenden Erfindung vorgeschlagen, dass zu jeder Position eines PTC-Heizelementes wenigstens ein Federsegment vorgesehen ist. Zur Erhöhung der Federkraft hat es sich ferner als vorteilhaft herausgestellt, für jede Position eines PTC-Heizelementes wenigstens zwei Federsegmente vorzusehen.

Das Einlegen der den Schichtaufbau bildenden Elemente mit nachfolgendem Verspannen der Elemente durch Einbringen des Verdrängers wird begünstigt durch eine Federanlagefläche, die an dem Gehäuseunterteil in Einbringrichtung zur Gehäuseinnenseite hin geneigt ausgebildet ist. Diese Ausgestaltung erlaubt es, zunächst die den Schichtaufbau bildenden Elemente in das Gehäuse einzulegen und bereits bei Einlegen der Feder durch Anlegen an die Federanlagefläche das verbleibende Spiel des Schichtaufbaus innerhalb des Gehäuses zu vermindern. Denn aufgrund der geneigten Federanlagefläche wird das Federelement beim Einschieben in das Gehäuseunterteil bereits in Richtung auf den Schichtaufbau zu bewegt. Der Verdränger wird vorzugsweise auf der dem Schichtaufbau abgewandten Seite der Feder zwischen dieser und einer Wand des Gehäuses eingesetzt und wirkt durch an der Federanlagefläche ausgesparte Durchtrittöffnungen gegen jeweils ein Federsegment. Bei dieser bevorzugten Ausgestaltung wird jedes einzelne der Federsegmente durch einen diesem Federsegment zugeordneten Verdränger gegen den Schichtaufbau gedrückt, so dass insgesamt eine relativ hohe Anpresskraft erzielt werden kann.

Zur Vermeidung von Montagefehlern bei der Herstellung der elektrischen Heizvorrichtung wird gemäß einer weiteren bevorzugten Ausgestaltung der vorliegenden Erfindung vorgeschlagen, dass an dem Gehäuseunterteil Einsetzführungen vorgesehen sind. Diese Einsetzführungen erstrecken sich in Einbringrichtung und es ist für jeden an dem Gehäuseoberteil vorgesehenen Verdränger eine entsprechende Einsetzführung an dem Gehäuseunterteil ausgespart. Bei der Montage müssen lediglich die jeweiligen Verdränger mit den ihnen zugeordneten Einsetzführungen gefluchtet werden, um ein lagegenaues Einbringen der Verdränger in das Gehäuseunterteil zu gewährleisten.

Als für die Montage günstig hat es sich herausgestellt, das Gehäuseunterteil mit einer Höhe von etwa 60 bis 75% der Gesamthöhe des Gehäuses auszubilden. Das Gehäuseunterteil bietet bei einer derartigen Ausgestaltung eine hinreichende Höhe und damit einen hinreichenden Rahmen mit den Schichtaufbau umgebenden Seitenflächen, so dass der Schichtaufbau beim Komprimieren des Schichtaufbaus bereits beim Eindringen des Verdrängers, d.h. bei unvollständigem Gehäuse sicher in dem Gehäuseunterteil wiedergelagert werden kann. Praktische Versuche haben gezeigt, dass eine Höhe des Gehäuseunterteils von etwa 2/3 der Gesamthöhe des Gehäuses besonders zu bevorzugen ist.

Im Hinblick auf eine möglichst kostengünstige Ausgestaltung der elektrischen Heizvorrichtung wird mit einer bevorzugten Ausführungsform der vorliegenden Erfindung vorgeschlagen, das Gehäuse aus zwei mittels Kunststoffspritzgießen hergestellten Gehäuseteilen zusammen zu setzen. Bei dieser bevorzugten Ausgestaltung wird das Gehäuse aus den zwei Gehäuseteilen, nämlich dem Gehäuseober- und dem Gehäuseunterteil gebildet. Auf weitere Gehäuseteile wird im Hinblick auf eine einfache Handhabung bei der Montage der elektrischen Heizvorrichtung verzichtet. Diese beiden Gehäuseteile bilden im zusammengebauten Zustand eine an dem Gehäuse integral ausgebildete Steckeraufnahme aus. Die Steckeraufnahme kann ausschließlich an einem oder an dem anderen Gehäuseteil oder aber teilweise an beiden Gehäuseteilen vorgesehen sein.

Weiterhin und zur einfachen Montage der elektrischen Heizvorrichtung wird gemäß einer weiteren bevorzugten Ausgestaltung der vorliegenden Erfindung vorgeschlagen, dass die Steckeraufnahme an einer Stirnseite des Schichtaufbaus vorgesehen ist und dass zwischen dem Schichtaufbau und der Steckeraufnahme ein Befestigungsflansch vorgesehen ist, der sich aus Flanschsegmenten zusammensetzt, die an den Gehäuseteilen einteilig ausgeformt sind.

Ferner wird mit der vorliegenden Erfindung ein Verfahren zur Herstellung einer elektrischen Heizvorrichtung vorgeschlagen. Bei dem erfindungsgemäßen Verfahren werden zunächst die den Schichtaufbau bildenden Teile, nämlich, das wenigstens eine wärmeabgebende Element und das wenigstens eine Radiatorelement spannungsfrei in das Gehäuseunterteil eingesetzt. Dieser in dem Gehäuseunterteil aufgenommene Schichtaufbau wird durch Einbringen eines Verdrängers in das Gehäuseunterteil unter Vorspannung gesetzt. Die Vorspannung kann dadurch erreicht werden, dass mit den Bauteilen des Schichtaufbaus ein Federelement in das Gehäuseunterteil eingelegt wird, welches zunächst spannungsfrei hierin eingelegt wird und beim Einbringen des Verdrängers unter Vorspannung gesetzt wird. Alternativ können auch die Längsschenkel selbst, d.h. Teile des Gehäuses durch Einbringen des Verdrängers elastisch verformt werden, um den Schichtaufbau unter Vorspannung zu setzen. Auch bei dieser Variante erfolgt das Einsetzen der Elemente des Schichtaufbaus spannungsfrei, d.h. das Gehäuse wird - im Gegensatz zu der Lehre der DE 197 06 199 - beim Einsetzen der Elemente des Schichtaufbaus, nicht unter Vorspannung gehalten.

Weitere vorteilhafte Ausgestaltungen der vorliegenden Erfindung sind Gegenstand der Unteransprüche.

Im Folgenden wird ein bevorzugtes Ausführungsbeispiel der vorliegenden Erfindung in Verbindung mit der Zeichnung näher erläutert. In dieser zeigen:
- Figur 1: eine perspektivische Ansicht eines Ausführungsbeispiels einer elektrischen Heizvorrichtung;
- Figur 2: eine perspektivische Draufsicht auf ein Gehäuseunterteil des in Figur 1 gezeigten Ausführungsbeispiels;
- Figur 3: eine perspektivische Draufsicht auf ein Gehäuseoberteil des in Figur 1 gezeigten Ausführungsbeispiels;
- Figur 4: das in Figur 1 gezeigte Ausführungsbeispiel bei der Montage mit wesentlichen Elementen der erfindungsgemäßen Heizvorrichtung in Explosionsdarstellung;
- Figur 5: eine Längsschnittansicht entlang der Linie IV-IV gemäß der Darstellung in Figur 1 bei der Montage des Ausführungsbeispiels; und
- Figur 6: die in Figur 4 dargestellte Schnittansicht nach Beendigung der Montage.

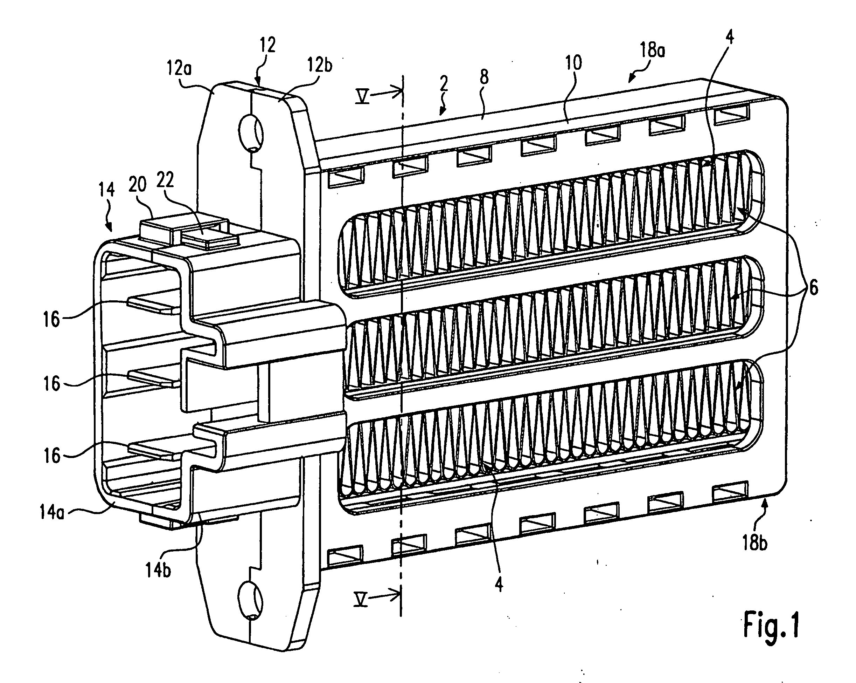

Die Figur 1 zeigt eine perspektivische Ansicht eines Ausführungsbeispiels der erfindungsgemäßen elektrischen Heizvorrichtung mit einem Gehäuse 2, welches zu den Seitenflächen jeweils drei Öffnungen 4 ausbildet, an denen in dem Gehäuse aufgenommene Radiatorelemente 6 freiliegen. Das Gehäuse 2 ist im Bereich der Radiatorelemente als im Wesentlichen kastenförmiges Bauteil bestehend aus einem Gehäuseunterteil 8 und einem Gehäuseoberteil 10 zusammengesetzt. An einer Stirnseite des im Wesentlichen kastenförmig ausgebildeten Gehäuses 2 befindet sich ein Befestigungsflansch 12, der an einer Seite unmittelbar an das kastenförmige Gehäuse 2 angrenzt und auf seiner anderen Seite eine Steckeraufnahme 14 trägt. In dieser Steckeraufnahme 14 liegen Kontakte 16 frei. Die Steckeraufnahme 14, wie auch der Befestigungsflansch 12 sind aus zwei Segmenten a, b zusammengesetzt, die jeweils einteilig an dem Gehäuseoberteil 10 bzw. dem Gehäuseunterteil 8 angeformt sind. Ein Gehäuseteil 8, 10 bildet zusammen mit jeweils einem Befestigungsflanschsegment 12a, 12b und einem Steckeraufnahmesegment 14a, 14b ein aus Kunststoff hergestelltes Spritzgießteil 18 aus. Die Spritzgießteile 18 sind - wie nachstehend näher erläutert wird - mittels Rastverbindungen gegeneinander gesichert. In Figur 1 ist eine an dem Steckeraufnahmesegment 14a ausgebildete Rastlasche und ein hierein eingreifende und an dem Steckersegment 14b ausgebildeter Raststeg 22 zu erkennen.

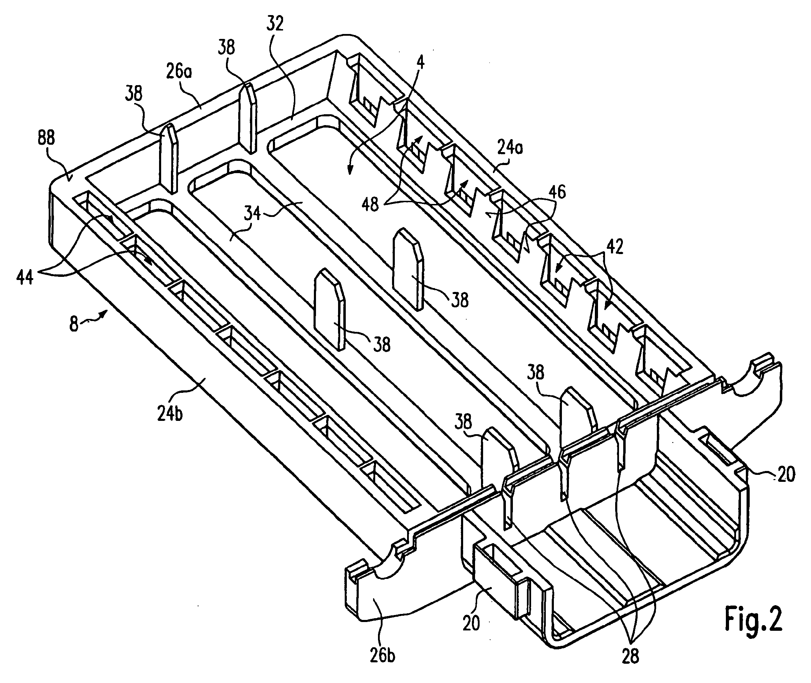

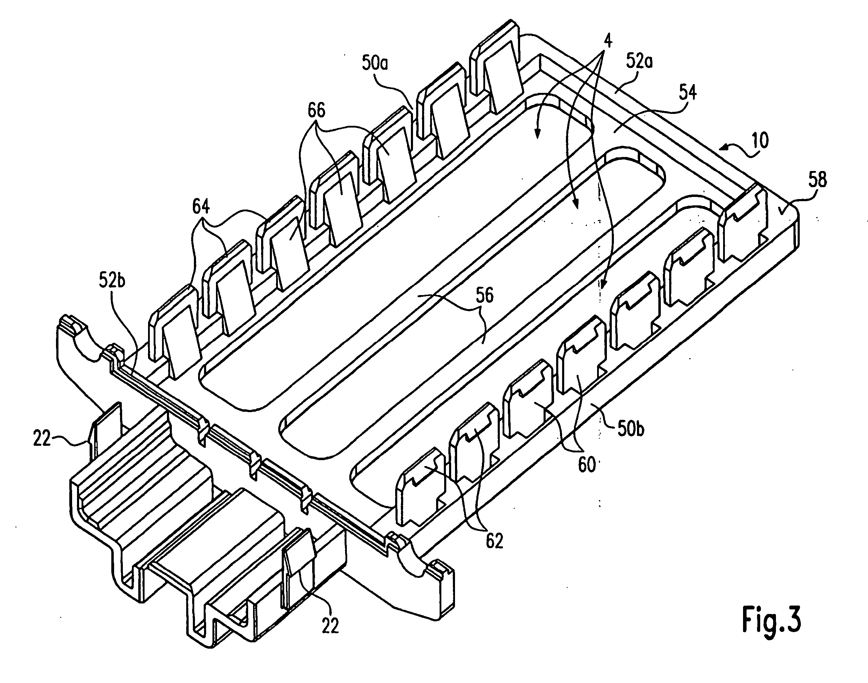

Die Figur 2 zeigt das Gehäuseunterteil 8 des in Figur 1 gezeigten Ausführungsbeispiels. Das Gehäuseunterteil ist im Wesentlichen wannenförmig mit rechteckiger Grundform ausgeformt und hat zwei Längsschenkel 24a, 24b und zwei sich hierzu rechtwinklig erstreckende Querstege 26a, 26b. Der flanschseitige Querschenkel 26b weist mehrere Durchbrechungen 28 zur Aufnahme von die Kontakte 16 bildenden Blechstreifen 30a, 30b, 30c auf, die in Figur 3 zu erkennen sind und auf die noch näher eingegangen wird.

An einem an der Unterseite des Gehäuseunterteils 18 ausgebildeten Boden 32 sind die drei Öffnungen 4 ausgespart, welche durch sich parallel zu den Längsschenkeln 24a, 24b erstreckenden Versteifungsstreben 34 begrenzt sind. Die Versteifungsstreben 34 sind in der Stärke des Bodens 32 ausgeformt und verbinden die beiden Querschenkel 26a, 26b an der Unterseite des Gehäuseunterteils 8. Der Boden 32 sowie die Versteifungsstreben 34 bilden zu der Innenseite des Gehäuseunterteils 8 Anlageflächen für einen nachstehend noch im näheren beschriebenen Schichtaufbau 80 (vgl. Figur 3) aus. In Längsrichtung der Versteifungsstreben 34 ragen von diesen sich parallel zu den Längsschenkeln erstreckende, plattenförmige Positioniermittel 38 ab, deren Enden abgeschrägt sind, um zusammen mit gegenüberliegenden Positioniermitteln 38 beim Zusammenbau des Schichtaufbaus 80 einen sich verjüngenden Aufnahmeschlitz 40 auszubilden. Die plattenförmig ausgeformten Positioniermittel 38 überragen die Oberkante des durch die Längs- und Querschenkel 24, 18 ausgebildeten Rahmens.

Die Längsschenkel 24a, 24b sind breiter als die Querschenkel 26 ausgebildet und bestehen aus zwei sich parallel zueinander erstreckenden Schenkelabschnitten, die nach Art einer Wabenstruktur über Stege zur Ausbildung von Einsetzführungen 42 miteinander verbunden sind. Die Einsetzführungen 42 sind an ihrem an der Oberseite der Längsschenkel 24 liegenden oberen Öffnungen zur Ausbildung von Einführtrichtern 44 kegelstumpfförmig verbreitert ausgeformt. Die zur Innenseite des Gehäuseunterteils 8 freiliegende Innenseite des Längsschenkels 24a bildet eine Federanlagefläche 46 aus. Diese Federanlagefläche 46 verläuft schräg zu der gegenüberliegenden Innenfläche des anderen Längsschenkels 24b und ist im Bereich jeder der Einsetzführungen 42 zur Ausbildung einer Durchtrittöffnung 48 U-förmig freigeschnitten. An dem Längsschenkel 24b sind ferner mehrere die Innenseite des Längsschenkels 24b überragende und auf einer Höhe in das Gehäuseunterteil 8 hineinragende Anlagestege 36 ausgeformt.

Die Figur 3 zeigt eine der perspektivischen Darstellung von Figur 2 entsprechende Darstellung des Gehäuseoberteils 10. Das Gehäuseoberteil 10 hat eine rahmenförmige Struktur, deren Höhe geringer als die Höhe des Gehäuseunterteils 8 ist und die durch zwei Längsstege 50a, 50b mit rechtwinklig hierzu angeordneten Querstegen 52a, 52b aufgespannt ist. Die Höhe der Längs- bzw. Querstege 50, 52 des Gehäuseoberteils trägt bei dem gezeigten Ausführungsbeispiel ein Drittel, die Höhe der korrespondierenden Längs- bzw. Querschenkel 24, 26 des Gehäuseunterteils 8 etwa zwei Drittel der Gesamthöhe des Gehäuses 2 bei. Das Gehäuseoberteil 10 hat einen im Wesentlichen korrespondierend zu dem Boden 32 des Gehäuseunterteils 8 ausgeformten Boden 54 mit drei Öffnungen 4 und sich dazwischen erstreckenden Versteifungsstreben 56.

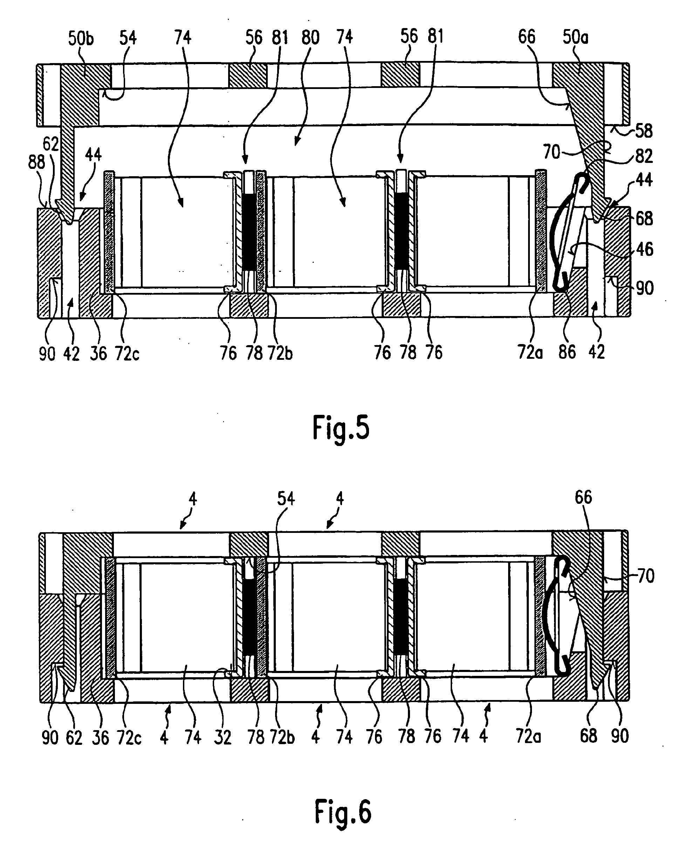

Von einer eine umlaufende Anlagefläche 58 ausbildenden Oberfläche der Quer- und Längsstege 50, 52 ragen im Bereich des Quersteges 50b sieben Rastzungen 60 ab, deren freie Enden in Längs- und Querrichtung spitz zulaufend ausgeformt sind, wobei die Abdachung der Rastzungen an ihrem äußeren oberen Ende in eine an der Außenseite der Rastzungen ausgeformte Rastnase 62 übergeht. Der andere Längssteg 50a des Gehäuseoberteils 10 wird von sieben Stegen 64 überragt, die an ihrer Innenseite jeweils eine Ablauframpe 66 ausformen, die sich zum Boden 54 des Gehäuseoberteils 10 hin verbreitern. Die Ablauframpen 66 haben eine Breite, die geringfügig kleiner als die Breite der Durchtrittöffnungen 48 des Gehäuseunterteils ist. Auch die Stege 64 sind in Längs- und Querrichtung an ihrem freien Ende spitz zulaufend ausgebildet und bilden, wie die Rastzungen 60, an ihrer Außenseite in Figur 3 nicht erkennbare Rastnasen 68 aus. Diese Rastnasen 68 sind in den Figuren 5 und 6 deutlich zu erkennen und diesen Figuren ist auch zu entnehmen, dass die Stege 64 die Anlagefläche 58 mit gleicher Länge überragen, wie die Rastzungen 60. Sowohl die Stege 64 als auch die Rastzungen 60 haben eine sich rechtwinklig zu der Anlagefläche 48 erstreckende ebene Rückseite 70, 72.

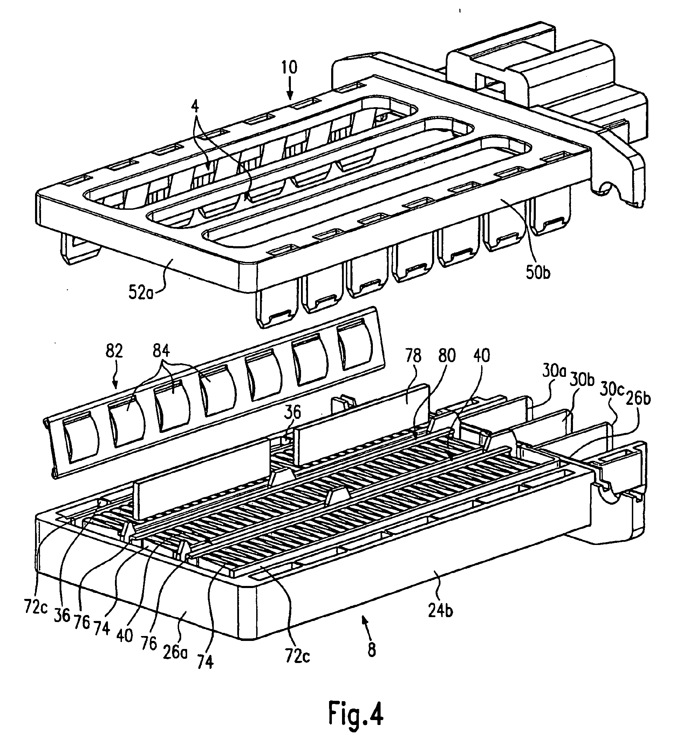

Nachfolgend wird die Montage des in den Figuren gezeigten Ausführungsbeispiels, insbesondere unter Bezugnahme auf die Figuren 4 bis 6 erläutert.

Zunächst werden in das Gehäuseunterteil gebogene Blechbänder 72a bis 72c eingelegt. Auch werden Wellrippen-Radiatorelemente 74, die vorliegend aus mäandrierend gebogenen Aluminium-Blechstreifen gebildet sind, in das Gehäuseunterteil 8 eingebracht. Diese Radiatorelemente 74 wurden in einem vorgelagerten Fertigungsschritt mit Radiator-Blechbändern 76 verbunden, die im Querschnitt U-förmig ausgeformt sind und die Radiatorelemente 74 an deren Stirnseiten fassen. In jeden einer der Öffnungen 4 zugeordneten Aufnahme wird ein Radiatorelement 74 mit dem dazugehörigen Radiatorblechband 76 sowie ein Blechband 72 eingelegt. Die Blechbänder 72 sind endseitig so umbogen, dass ihre freien Enden als die Blechstreifen 30a bis 30c im Bereich der Steckeraufnahme 14 freiliegen. Die Länge der Radiatorblechbänder 74 ist so gewählt, dass diese auch bei einer geringen Verlagerung der Radiatorelemente 74 in dem Gehäuseunterteil 8 die sich im Bereich des Quersteges 26b parallel zu diesem erstreckenden Blechbänder 72a bis 72d nicht berühren können.

Nachdem die Radiatorelemente 74 sowie die Blechbänder 72 und die Radiatorblechbänder 76 in das Gehäuseunterteil 8 eingebracht worden sind, werden in Figur 4 gezeigte PTC-Heizelemente 78 in die zwischen sich parallel erstreckenden Blechbändern 72, 76 und den Positioniermittel 78 ausgebildeten Aufnahmeschlitzen 40 eingeschoben. Die PTC-Heizelemente 78 haben eine größere Dicke als die stegförmigen Positioniermittel 38. Die Radiatorelemente 74 sowie die Blechbänder 72, 76 sind zu diesem Zeitpunkt mit Spiel in dem Gehäuseunterteil 8 aufgenommen und lassen sich dementsprechend in Querrichtung verschieben, um einen hinreichenden Einbauraum für die PTC-Heizelemente zu schaffen. Die Positioniermittel 38 sind so an dem Gehäuseunterteil 8 angeordnet, dass die zur Montage erforderliche Querbewegung der Blechbänder 72, 76 bzw. der Radiatorelemente 74 nicht behindert wird. Nachdem sämtliche PTC-Heizelemente 78 zwischen sich parallel erstreckende Blechbänder 72, 76 in die Aufnahmeschlitze 40 eingeschoben worden sind, ist ein Schichtaufbau 80 bestehend aus den PTC-Heizelementen 78, den Radiatorelementen 74 sowie den Blechbändern 72 und den Radiatorblechbändern 76 in dem Gehäuseunterteil 8 aufgenommen. Dieser Schichtaufbau ist ohne Vorspannung in dem Gehäuseunterteil 8 gehalten. In dem Schichtaufbau bilden die Blechbänder 72, 76 zusammen mit den dazwischen angeordneten PTC-Heizelementen 78 wärmeabgebende Elemente 81 aus. Nun wird ein in Figur 4 gezeigtes Federelement 82 parallel zu den Längsschenkeln 24 ausgerichtet und zwischen der Außenseite des Schichtaufbaus 80 und der Federanlagefläche 46 in das Gehäuseunterteil 8 eingelegt. Aufgrund der zu dem Schichtaufbau 80 hin gerichteten Neigung der Federanschlagfläche 46 ergibt sich ein zu dem Boden 32 des Gehäuseunterteils 8 hin verjüngender Aufnahmeraum für das Federelement 82, wodurch das Einführen des Federelementes 82 vereinfacht wird, dieses jedoch am Ende der Einbringbewegung in das Gehäuseunterteil 8 bereits sehr nahe an dem Schichtaufbau 80 liegt.

Wie der Darstellung in Figur 4 zu entnehmen ist, ist das Federelement 82 durch einen Blechstreifen gebildet, an dem durch Stanzbearbeitung in einer der Anzahl der Stege 64 entsprechenden Anzahl vorgesehene Federsegmente 84 ausgeformt sind. Die einzelnen Federsegmente 84 sind zu dem Schichtaufbau 80 hin konvex gewölbt. An ihrer bodenseitigen Unterseite sind die Federsegmente 84 fest mit dem Blechstreifen des Federelementes 82 verbunden. An der gegenüberliegenden Oberseite sind die Federsegmente 84 freigeschnitten. Hierdurch wird eine Beweglichkeit der Federsegmente 84 in Einbringrichtung sämtlicher Bauteile in das Gehäuseunterteil 8, d.h. in einer Richtung rechtwinklig zu der Ebene des Schichtaufbaus 80 ermöglicht.

Nun wird das Gehäuseoberteil in die in Figur 5 gezeigte Stellung gebracht, in welcher die Rastzungen 60 bzw. Stege 64 mit ihren zugeordneten Einsetzführungen 42 fluchten. Die Stege 64 bzw. die Rastzungen 60 werden nun in einer Richtung rechtwinklig zu der Ebene des Schichtaufbaus in das Gehäuseunterteil 8 eingebracht. Dabei laufen zunächst die abgeschrägten Flächen der Rastnasen, 62, 68 gegen die nach Außen geneigten Flächen der Einführtrichter 44. Die Rastzungen 60 bzw. die Stege 64 werden hierdurch gegenüber dem Längssteg 50 elastisch vorgespannt. Ferner gleitet das oberseitige und umbogene Ende des Federelementes 82 an der Ablauframpe 66 ab und wird hierdurch um ein an dem Boden des Gehäuseunterteils gebildetes Auflager 86 in Richtung auf den Schichtaufbau 80 verschwenkt. Aufgrund dieser Verschwenkbewegung legen sich die einzelnen Federsegmente 84 an die äußere Seitenfläche des Schichtaufbaus 80 an, die vorliegend durch das Blechband 72c gebildet wird. Bei fortschreitendem Einbringen wird das Federelement 62 weiter um das Auflager 86 verschwenkt, wodurch zunächst innerhalb des Schichtaufbaus 80 verbleibende Spalte geschlossen und die Einzelelemente des Schichtaufbaus 80 flächig aneinander gelegt werden. Der Schichtaufbau liegt dann gegenüber dem Längsschenkel an dem Anlagesteg 36 an. Die durch das Federelement 62 aufgebrachte Druckkraft wird über diesen Anlagesteg 36 von dem Gehäuseunterteil 8 wiedergelagert. Bei fortschreitender Eindringbewegung des Steges 64 wird das Federelement weiter um das Auflager 86 verschwenkt. Die bereits an der Außenseite des Schichtaufbaus 80 anliegenden Federsegmente 84 werden hierbei elastisch zu dem Blechstreifen vorgespannt. Die Einschiebbewegung, d.h. das Aufschieben des Gehäuseoberteils 10 auf das Gehäuseunterteil 8 endet, wenn die Anlagefläche 58 des Gehäuseoberteils an die an dem Gehäuseoberteil 10 korrespondierend hierzu ausgebildeten Gegenfläche 88 anliegt (vgl. Figur 6). Am Ende der Einbringbewegung sind die Rastnasen 62, 68 an Rastgegenflächen 90 vorbeigeglitten, die rechtwinklig zu den Einsetzführungen 42 ausgerichtet sind und zu den Einsetzführungen 42 münden. Hierbei haben sich die elastisch in die Stege 64 bzw. die Rastzungen 60 eingeprägten Spannungen entspannt. Die Stege 64 bzw. die Rastzungen 60 sind nach Außen zur Herstellung einer Rastverbindung zwischen dem Gehäuseunterteil 8 und dem Gehäuseoberteil 10 verschwenkt.

Das obere Ende des Federelementes 82 liegt in der nun erreichten Einbaulage an dem Übergang zwischen dem Boden 54 und den Ablauframpen 66 an. Die Ablauframpen 66 befinden sich jeweils innerhalb der an der Federanlagefläche 46 ausgesparten Durchtrittöffnungen 48. Jede der Ablauframpen 66 spannt ein einzelnes Federsegment 84 gegen den Schichtaufbau 80 vor. Da die Federsegmente 84 und die Stege 64 über die gesamte Länge der Längsschenkel 24 verteilt angeordnet sind, ergibt sich eine gleichmäßige Vorspannung über die gesamte Länge des Schichtaufbaus 80. Die in den Schichtaufbau 80 vorgebrachte Vorspannung wird federseitig durch Anlage der Rückseite 70 an dem Längsschenkel 24 im Bereich der Einsetzführungen 42 wiedergelagert und in das Gehäuse 2 eingeleitet. Der durch die in Einbaulage gehaltenen Stege 64 vorgespannte Schichtaufbau ist durch Einbringen der Stege 64 nunmehr unter Vorspannung in dem Gehäuseunterteil 8 gehalten. Das Gehäuseunterteil wird oberseitig von dem Boden 54 des Gehäuseoberteils 10 abgedeckt, so dass die Elemente des Schichtaufbaus 80 unverlierbar in dem Gehäuse 2 aufgenommen sind. Die Fläche des Bodens 54 liegt an den Stirnseiten der Positioniermittel 38 an. Auch liegen die Stirnseiten der Blechbänder 72 und der Radiatorblechbänder 76 zwischen den gegenüberliegenden Flächen der Böden 32 und 54 des Gehäuseunter- bzw. -oberteils 8, 10 an bzw. sind gegenüber diesen Flächen mit geringem Abstand lagegesichert.

Die vorliegende Erfindung ist nicht auf das gezeigte Ausführungsbeispiel beschränkt. So ist es vorstellbar, das Federelement als integralen Bestandteil des Gehäuses 2 vorzusehen, insbesondere als integralen Bestandteil des Längsschenkels 24 bzw. des Längssteges 50. Aus fertigungstechnischer Sicht zu bevorzugen ist ferner die Ausgestaltung eines Federelementes als einteiliges Bauteil des mittels Spritzgießen hergestellten Gehäuseunterteils 8 bzw. Gehäuseoberteils 10. Weiterhin ist es denkbar, statt der Stege mit den Ablauframpen an dem Gehäuseoberteil oder einem anderen mit dem Gehäuseunterteil verbindbaren Teil ebene Zungen vorzusehen, die in einer Richtung im Wesentlichen rechtwinklig zu dem Schichtaufbau in das Gehäuseunterteil eingebracht werden und mit keilförmigen Gegenflächen zusammenwirken, die seitlich neben dem Schichtaufbau vorgesehen sind. Das Spreizen des Schichtaufbaus durch Einbringen eines Verdrängers kann grundsätzlich auch an jeder beliebigen Stelle zwischen den Elementen des Schichtaufbaus erfolgen. Das in der Figur gezeigte Ausführungsbeispiel weist jedoch demgegenüber den Vorteil auf, dass die Heizvorrichtung relativ kompakt ausgestaltet ist und das Federelement 82 im Randbereich des Gehäuses 2 vorgesehen ist, an dem ohnehin eine Anlagefläche zum Einbau des elektrischen Heizelementes in einen luftführenden Kanal ein verbreiteter Rand vorgesehen sein sollte. Die Breite der Versteifungsstreben 34 bzw. 56 entspricht bei dem gezeigten Ausführungsbeispiel in etwa der Breite der einzelnen wärmeabgebenden Elemente 81, die jeweils durch die in Reihe hintereinander vorgesehenen PTC-Heizelemente 78 mit den an diesen anliegenden Blechbändern 72 bzw. 76 gebildet sind. Bei dem in Figur 6 gezeigten Ausführungsbeispiel wird das linke wärmeabgebende Element 81 durch ein Radiatorblechband 76, zwei PTC-Heizelemente 78 und ein Blechband 72 gebildet. Das rechts gezeigte wärmeabgebende Element 81 besteht aus zwei Radiatorblechbändern 76 mit dazwischen angeordneten PTC-Heizelementen 78.

Das in der Zeichnung gezeigte Ausführungsbeispiel wird auf herkömmliche Weise dadurch betrieben, dass über die Kontakte 16 eine Spannung angelegt wird, so kann beispielsweise der mittlere Blechstreifen 30b geerdet sein, wohingegen die Blechstreifen 30a, 30c über eine Steuereinheit mit einer Spannungsquelle verbunden sind. Durch entsprechendes Aufschalten einer Spannung können wahlweise die zwischen dem Blechband 72b und dem äußeren Blechband 72c befindlichen zwei Radiatorelemente durch die wärmeabgebenden Elemente 81 erwärmt werden. Eine geringere Wärmemenge ergibt sich, sofern die Spannung zwischen dem Blechband 72a und dem Blechband 72b angelegt wird. In diesem Fall wird die von den wärmeabgebenden Elementen 81 erzeugte Wärme über ein Radiatorelement 74 an die die Heizvorrichtung durchströmende Luft abgegeben. Das Ausschalten der Spannung auf beide Blechstreifen 30a, 30c führt zu einer maximalen Wärmeabgabe.

### Bezugszeichenliste

- 2: Gehäuse
- 4: Öffnung
- 6: Radiatorelement
- 8: Gehäuseunterteil
- 10: Gehäuseoberteil
- 12: Befestigungsflansch
- 12a: Befestigungsflanschsegment
- 12b: Befestigungsflanschsegment
- 14: Steckeraufnahme
- 14a: Steckeraufnahmesegment
- 14b: Steckeraufnahmesegment
- 16: Kontakt
- 18: Kunststoffspritzgießteil
- 20: Rastlasche
- 22: Raststeg
- 24: Längsschenkel
- 26: Querschenkel
- 28: Durchbrechung
- 30: Blechstreifen
- 32: Boden
- 34: Versteifungsstrebe
- 36: Anlagesteg
- 38: Positioniermittel
- 40: Aufnahmeschlitz
- 42: Einsetzführung
- 44: Einführtrichter
- 46: Federanlagefläche
- 48: Durchtrittöffnung
- 50: Längssteg
- 52: Quersteg
- 54: Boden
- 56: Versteifungsstreben
- 58: Anlagefläche
- 60: Rastzunge
- 62: Rastnase
- 64: Steg
- 66: Ablauframpe
- 68: Rastnase
- 70: Rückseite
- 72: Blechband
- 74: Radiatorelement
- 76: Radiatorblechband
- 78: PTC-Heizelement
- 80: Schichtaufbau
- 81: wärmeabgebende Elemente
- 82: Federelement
- 84: Federsegment
- 86: Auflager
- 88: Gegenfläche
- 90: Rastgegenfläche

## Patentansprüche

1. Elektrische Heizvorrichtung, insbesondere als Zusatzheizung für Kraftfahrzeuge, mit einem offenen Gehäuse (2), in dem ein Schichtaufbau (80) mit wenigstens einem Radiatorelement (74), wenigstens einem wärmeabgebenden Element (81) mit wenigstens einem PTC-Heizelement (78) und wenigstens ein den Schichtaufbau (80) unter Vorspannung haltendes Federelement (82) aufgenommen ist und in den mehrere elektrisch mit dem wenigstens einen PTC-Heizelement (78) verbundene Kontakte (16) isoliert gehalten sind,
**dadurch gekennzeichnet,**
**dass** das Gehäuse (2) ein Gehäuseunterteil (8) und wenigstens einen Verdränger (64) umfasst, der zur Aufprägung der Vorspannung in einer Richtung in etwa rechtwinklig zu der Ebene des Schichtaufbaus (80) in das Gehäuseunterteil (8) einbringbar und in einer Einbaulage gegenüber diesem festgelegt ist.

2. Elektrische Heizvorrichtung nach Anspruch 1, **dadurch gekennzeichnet, dass** der Verdränger (64) keilförmig ausgebildet ist.

3. Elektrische Heizvorrichtung nach Anspruch 1 oder 2, **dadurch gekennzeichnet, dass** der Verdränger einen in der Einbaulage des in die Ebene des Schichtaufbaus (80) ragenden Steg (64) umfasst.

4. Elektrische Heizvorrichtung nach Anspruch 3, **dadurch gekennzeichnet, dass** das Federelement (82) an wenigstens einem Rand des Schichtaufbaus (80) vorgesehen ist und dass der Steg (64) wenigstens eine sich in Einbringrichtung verjüngende und mit dem Federelement (82) zusammenwirkende Ablauframpe (66) aufweist.

5. Elektrische Heizvorrichtung nach Anspruch 4, **dadurch gekennzeichnet, dass** die der Ablauframpe (66) abgewandte Rückseite des Steges (64) in Einbaulage an dem Gehäuseunterteil (8) anliegt.

6. Elektrische Heizvorrichtung nach einem der vorherigen Ansprüche, **gekennzeichnet durch** an dem Gehäuseunterteil (8) angeordnete Positioniermittel (38) zum Vorfixieren des PTC-Heizelementes (78).

7. Elektrische Heizvorrichtung nach einem der vorherigen Ansprüche, **dadurch gekennzeichnet, dass** der Verdränger (64) an einem in Einbaulage mit dem Gehäuseunterteil (8) verbundenen und den Schichtaufbau (80) oberseitig fassenden Gehäuseoberteil (10) angeordnet ist.

8. Elektrische Heizvorrichtung nach einem der vorherigen Ansprüche, **dadurch gekennzeichnet, dass** das Gehäuseunterteil (8) und/oder das Gehäuseoberteil (10) sich über den Schichtaufbau (80) erstreckende Versteifungsstreben (34, 56) aufweisen.

9. Elektrische Heizvorrichtung nach Anspruch 8, **dadurch gekennzeichnet, dass** die Versteifungsstreben (34, 56) fluchtend zu den wärmeabgebenden Elementen (81) ausgerichtet sind.

10. Elektrische Heizvorrichtung nach Anspruch 9, **dadurch gekennzeichnet, dass** die Versteifungsstreben (34, 56) im Wesentlichen in der Breite der wärmeabgebenden Elemente (81) ausgeformt sind.

11. Elektrische Heizvorrichtung nach einem der Ansprüche 7 bis 10, **dadurch gekennzeichnet, dass** das Gehäuseunterteil (8) mit dem Gehäuseoberteil (10) verrastet ist.

12. Elektrische Heizvorrichtung nach Anspruch 11, **dadurch gekennzeichnet, dass** an dem Reihenende des Verdrängers (64) eine mit dem Gehäuseunterteil (8) in Einbaulage zusammenwirkende Rastnase (68) ausgebildet ist.

13. Elektrische Heizvorrichtung nach Anspruch 12, **dadurch gekennzeichnet, dass** die Rastnase (68) in der Einbaulage mit einer nach innen versetzt an dem Gehäuseunterteil (8) ausgebildeten Rastgegenfläche (90) zusammenwirkt.

14. Elektrische Heizvorrichtung nach einem der vorherigen Ansprüche, **dadurch gekennzeichnet, dass** das Federelement (82) aus einem Blechteil mit aus diesem herausragenden Federsegmenten (84) besteht.

15. Elektrische Heizvorrichtung nach Anspruch 14, **dadurch gekennzeichnet, dass** die Federsegmente (84) in Einbringrichtung beweglich an dem Blechteil gehalten sind.

16. Elektrische Heizvorrichtung nach Anspruch 14 oder 15, **dadurch gekennzeichnet, dass** die Federsegmente (84) durch in Einbringrichtung gewölbte und einseitig mit dem Blechstreifen verbundene Stanzteile ausgebildet sind.

17. Elektrische Heizvorrichtung nach Anspruch 15 oder 16, **dadurch gekennzeichnet, dass** zu jeder Position eines der PTC-Heizelemente (78) wenigstens ein Federsegment (84) vorgesehen ist.

18. Elektrische Heizvorrichtung nach Anspruch 17, **dadurch gekennzeichnet, dass** für jede Position eines der PTC-Heizelemente (78) wenigstens zwei Federsegmente (84) vorgesehen sind.

19. Elektrische Heizvorrichtung nach einem der Ansprüche 14 bis 18, **dadurch gekennzeichnet, dass** das Gehäuseunterteil (8) eine in Einbringrichtung geneigte Federanlagefläche (46) ausbildet, die im Bereich der Federsegmente (84) jeweils eine Durchtrittöffnung (48) für den Verdränger (64) aufweist.

20. Elektrische Heizvorrichtung nach einem der vorherigen Ansprüche, **dadurch gekennzeichnet, dass** an dem Gehäuseunterteil (8) sich in Einbringrichtung erstreckende Einsetzführungen (42) für die an dem Gehäuseoberteil (10) vorgesehenen Verdränger (64) ausgespart sind.

21. Elektrische Heizvorrichtung nach einem der vorherigen Ansprüche, **dadurch gekennzeichnet, dass** das Gehäuseunterteil (8) etwa 3/5 bis etwa 3/4, vorzugsweise etwa 2/3 der Gesamthöhe des Gehäuses (2) beträgt.

22. Elektrische Heizvorrichtung nach einem der vorherigen Ansprüche, **dadurch gekennzeichnet, dass** das Gehäuse (2) aus zwei aus Kunststoff gebildeten Spritzgießteilen (18) besteht, die integral eine an dem Gehäuse (2) vorgesehene Steckeraufnahme (14) ausbilden.

23. Elektrische Heizvorrichtung nach Anspruch 22, **dadurch gekennzeichnet, dass** die Steckeraufnahme (14) an einer Stirnseite des Schichtaufbaus (80) vorgesehen ist und dass zwischen dem Schichtaufbau (80) und der Steckeraufnahme (14) ein aus einteilig an den Gehäuseteilen (6, 10) angeformten Flanschsegmenten (12a, 12b) gebildeter Befestigungsflansch (12) vorgesehen ist.

24. Verfahren zur Herstellung einer elektrischen Heizvorrichtung, insbesondere als Zusatzheizung für Kraftfahrzeuge, mit einem ein Gehäuseunterteil (8) umfassenden offenen Gehäuse (2) und einem in dem Gehäuse (2) aufgenommenen Schichtaufbau (80) aus wenigstens einem wärmeabgebenden Element (81) mit wenigstens einem PTC-Heizelement (78) und einem Radiatorelement (74) sowie einem Federelement (82), wobei der Schichtaufbau (80) durch das Federelement (82) in dem Gehäuse (2) unter Vorspannung gehalten ist, mit den Montageschritten:
spannungsfreies Einsetzen des Radiatorelements (74) sowie des wärmeabgebenden Elementes (81) in das Gehäuseunterteil (8), und
Vorspannen des Schichtaufbaus (80) durch Einbringen eines Verdrängers in das Gehäuseunterteil (8).

## Claims

1. An electric heating device used in particular as an auxiliary heating for motor vehicles and comprising an open housing (2) accommodating a layered structure (80) which includes at least one radiator element (74) and at least one heat-emitting element (81) with at least one PTC heating element (78), and further accommodating at least one spring element (82) which pretensions said layered structure (80), a plurality of contacts (16) being held in said housing (2) in an insulating manner and electrically connected to the at least one PTC heating element (78),
**characterized in that**
the housing (2) comprises a lower housing component (8) and at least one displacer (64) which, for applying the pretension, is adapted to be inserted into said lower housing component (8) in a direction approximately perpendicular to the plane of the layered structure (80) and which, in the mounted position, is secured in position relative to said lower housing component (8).

2. An electric heating device according to claim 1, **characterized in that** the displacer (64) is wedge-shaped.

3. An electric heating device according to claim 1 or 2, **characterized in that** the displacer comprises a web (64) which, in the mounted position, projects up to and into the plane of the layered structure (80).

4. An electric heating device according to claim 3, **characterized in that** the spring element (82) is provided on at least one border of the layered structure (80) and the web (64) comprises at least one run-down ramp (66) tapering in the direction of insertion and cooperating with the spring element (82).

5. An electric heating device according to claim 4, **characterized in that**, in the mounted position, the web back facing away from the run-down ramp (66) abuts on the lower housing component (8).

6. An electric heating device according to one of the preceding claims, **characterized by** positioning means (38) arranged on the lower housing component (8) and used for pre-fixing the PTC heating element (78).

7. An electric heating device according to one of the preceding claims, **characterized in that** the displacer (64) is arranged on an upper housing component (10) which, in the mounted position, is connected to the lower housing component (8) and which encompasses the layered structure (80) from above.

8. An electric heating device according to one of the preceding claims, **characterized in that** the lower housing component (8) and/or the upper housing component (10) have stiffening struts (34, 56) extending across the layered structure (80).

9. An electric heating device according to claim 8, **characterized in that** the stiffening struts (34, 56) are in alignment with the heat-emitting elements (81).

10. An electric heating device according to claim 9, **characterized in that** the stiffening struts (34, 56) have a width that corresponds essentially to the width of the heat-emitting elements (81).

11. An electric heating device according to one of the claims 7 to 10, **characterized in that** the lower housing component (8) and the upper housing component (10) are in locking engagement.

12. An electric heating device according to claim 11, **characterized in that** a detent lug (68) which, in the mounted position, cooperates with the lower housing component (8) is formed on the free end of the displacer (64).

13. An electric heating device according to claim 12, **characterized in that**, in the mounted position, the detent lug (68) cooperates with a detent countersurface (90) formed on the lower housing component (8) at an inwardly displaced position.

14. An electric heating device according to one of the preceding claims, **characterized in that** the spring element (82) is made of a sheet-metal part with spring segments (84) projecting therefrom.

15. An electric heating device according to claim 14, **characterized in that** the spring segments (84) are held movably in the direction of insertion on said sheet-metal part.

16. An electric heating device according to claim 14 or 15, **characterized in that** the spring segments (84) are formed by punched parts which are convex in the direction of insertion and one end of which is connected to the sheet-metal strip.

17. An electric heating device according to claim 15 or 16, **characterized in that** at least one spring segment (84) is provided for each position of one of the PTC heating elements (78).

18. An electric heating device according to claim 17, **characterized in that** at least two spring segments (84) are provided for each position of one of the PTC heating elements (78).

19. An electric heating device according to one of the claims 14 to 18, **characterized in that** the lower housing component (8) defines a spring contact surface (46) which is inclined in the direction of insertion and which is provided with respective passage openings (48) for the displacer (64) in the area of the spring segments (84).

20. An electric heating device according to one of the preceding claims, **characterized in that** the lower housing component (8) has formed therein insertion guide means (42) for the displacers (64) provided on the upper housing component (10), said insertion guide means extending in the direction of insertion.

21. An electric heating device according to one of the preceding claims, **characterized in that** the lower housing component (8) has a height amounting to approx. 3/5 up to approx. 3/4, preferably approx. 2/3 of the overall height of the housing (2).

22. An electric heating device according to one of the preceding claims, **characterized in that** the housing (2) comprises two injection-moulded parts (18) made of plastic material and forming a plug reception means (14) that is formed integrally with the housing (2).

23. An electric heating device according to claim 22, **characterized in that** the plug reception means (14) is provided on an end face of the layered structure (80) and that the layered structure (80) and the plug reception means (14) have provided between them a fastening flange (12) defined by flange segments (12a, 12b) that are formed integrally with the housing components (6, 10).

24. A method for producing an electric heating device used in particular as an auxiliary heating for motor vehicles and comprising an open housing (2), which includes a lower housing component (8), and a layered structure (80) accommodated in said housing (2) and comprising at least one heat-emitting element (81) with at least one PTC heating element (78) and a radiator element (74), as well as a spring element (82), said layered structure (80) being held in said housing (2) under a pretension applied by the spring element (82), said method comprising the mounting steps:
tension-free insertion of the radiator element (74) and of the heat-emitting element (81) into the lower housing component (8), and
pretensioning the layered structure (80) by inserting a displacer into the lower housing component (8).

## Revendications

1. Dispositif de chauffage électrique, en particulier en tant que chauffage d'appoint pour des véhicules automobiles, avec un boîtier (2) ouvert, dans lequel est logée une structure à couches (80) avec au moins un élément radiateur (74), au moins un élément (81) dissipant de la chaleur avec au moins un élément chauffant à caractéristiques PTC (78), et au moins un élément élastique (82), maintenant sous précontrainte la structure à couches (80), et dans lequel sont maintenus isolés plusieurs contacts (16), reliés électriquement à l'au moins un élément chauffant à caractéristiques PTC (coefficient de température positif) (78),
**caractérisé en ce que**,
le boîtier (2) comprend une partie inférieure de boîtier (8) et au moins un déplaceur (64), susceptible d'être introduit dans la partie inférieure de boîtier (8), pour appliquer la précontrainte dans une direction à peu près perpendiculaire au plan de la structure à couches (80) et d'être fixé par rapport à celle-ci à une position montée.

2. Dispositif de chauffage électrique selon la revendication 1, **caractérisé en ce que** le déplaceur (64) est cunéiforme.

3. Dispositif de chauffage électrique selon la revendication 1 ou 2, **caractérisé en ce que** le déplaceur comprend une nervure (64) qui, à la position montée, pénètre dans le plan de la structure à couches (80).

4. Dispositif de chauffage électrique selon la revendication 3, **caractérisé en ce que** l'élément élastique (82) est prévu sur au moins un bord de la structure à couches (80), et **en ce que** la nervure (64) présente au moins une rampe de descente (66), allant en s'effilant dans la direction d'insertion et coopérant avec l'élément élastique (82).

5. Dispositif de chauffage électrique selon la revendication 4, **caractérisé en ce que** la face arrière, opposée à la rampe de descente (66), de la nervure (64), à la position montée, s'appuie sur la partie inférieure de boîtier (8).

6. Dispositif de chauffage électrique selon l'une des revendications précédentes, **caractérisé par** des moyens de positionnement (38), disposés sur la partie inférieure de boîtier (8) pour assurer la préfixation de l'élément de chauffage à caractéristiques PTC (78).

7. Dispositif de chauffage électrique selon l'une des revendications précédentes, **caractérisé en ce que** le déplaceur (64) est disposé sur une partie supérieure de boîtier (10) qui, à la position montée, est reliée à la partie inférieure de boîtier (8) et qui enchâsse du côté supérieur la structure à couches (80).

8. Dispositif de chauffage électrique selon l'une des revendications précédentes, **caractérisé en ce que** la partie inférieure de boîtier (8) et/ou la partie supérieure de boîtier (10) présentent des entretoises de rigidification (34, 56) s'étendant sur la structure à couches (80)

9. Dispositif de chauffage électrique selon la revendication 8, **caractérisé en ce que** les entretoises de rigidification (34, 56) sont orientées en alignement avec les éléments (81) dissipant de la chaleur.

10. Dispositif de chauffage électrique selon la revendication 9, **caractérisé en ce que** les entretoises de rigidification (34, 56) sont formées essentiellement dans la largeur des éléments (81) dissipant de la chaleur.

11. Dispositif de chauffage électrique selon l'une des revendications 7 à 10, **caractérisé en ce que** la partie inférieure de boîtier (8) est encliquetée avec la partie supérieure de boîtier (10).

12. Dispositif de chauffage électrique selon la revendication 11, **caractérisé en ce que**, à l'extrémité de rangée du déplaceur (64), est réalisé un ergot d'encliquetage (68) coopérant, en position de montage, avec la partie inférieure de boîtier (8).

13. Dispositif de chauffage électrique selon la revendication 12, **caractérisé en ce que** l'ergot d'encliquetage (68), à la position de montage, coopère avec une face conjuguée d'encliquetage (90) réalisée en décalage vers l'intérieur sur la partie inférieure de boîtier (8).

14. Dispositif de chauffage électrique selon l'une des revendications précédentes, **caractérisé en ce que** l'élément élastique (82) est composé d'une partie en tôle avec des segments élastiques (84) ressortant de celle-ci.

15. Dispositif de chauffage électrique selon la revendication 14, **caractérisé en ce que** les segments élastique (84) sont maintenus de façon mobile sur la partie en tôle, dans la direction d'insertion.

16. Dispositif de chauffage électrique selon la revendication 14 ou 15, **caractérisé en ce que** les segments élastiques (84) sont réalisés au moyen de pièces d'estampage incurvées dans la direction d'insertion et reliées sur un côté à la bande de tôle.

17. Dispositif de chauffage électrique selon la revendication 15 ou 16, **caractérisé en ce que** à chaque position d'un des éléments de chauffage à caractéristiques PTC (78) est prévu au moins un segment élastique (84).

18. Dispositif de chauffage électrique selon la revendication 17, **caractérisé en ce qu'**au moins deux segments élastiques (84) sont prévus pour chaque position d'un des éléments de chauffage à caractéristiques PTC (78).

19. Dispositif de chauffage électrique selon l'une des revendications 14 à 18, **caractérisé en ce que** la partie inférieure de boîtier (8) constitue une face d'appui de ressort (46), inclinée dans la direction d'insertion et présentant, dans la zone des segments élastiques (84), une ouverture de passage (48) pour chaque déplaceur (64).

20. Dispositif de chauffage électrique selon l'une des revendications précédentes, **caractérisé en ce que** sur la partie inférieure de boîtier (8) sont ménagés des guidages d'insertion (42) s'étendant dans la direction d'insertion pour les déplaceurs (64) prévus sur la partie supérieure de boîtier (10).

21. Dispositif de chauffage électrique selon l'une des revendications précédentes, **caractérisé en ce que** la partie inférieure de boîtier (8) fait à peu près 3/5 à à peu près 3/4, de préférence à peu près 2/3, de la hauteur totale du boîtier (2).

22. Dispositif de chauffage électrique selon l'une des revendications précédentes, **caractérisé en ce que** le boîtier (2) est composé de deux pièces moulées par injection (18) formées de matière synthétique, constituant solidairement un logement de prise mâle (14) prévu sur le boîtier (2).

23. Dispositif de chauffage électrique selon la revendication 22, **caractérisé en ce que** le logement de prise mâle (14) est prévu sur une face frontale de la structure à couches (80), et **en ce qu'**entre la structure à couches (80) et le logement de prise mâle (14) est prévue une bride de fixation (12), formée de segments de bride (12a, 12b) formés d'un seul tenant et d'une seule pièce sur les parties de boîtier (6, 10).

24. Procédé de fabrication d'un dispositif de chauffage électrique, en particulier, en tant que chauffage d'appoint pour des véhicules automobiles, avec un boîtier (2) ouvert comprenant une partie inférieure de boîtier (8) et une structure à couches (80) logée dans le boîtier (2) formé d'au moins un élément (81) dissipant de la chaleur, avec au moins un élément de chauffage à caractéristiques PTC (78) et un élément radiateur (74), ainsi qu'un élément élastique (82), la structure à couches (80) étant maintenue sous précontrainte dans le boîtier (2) par l'élément élastique (82), comprenant les étapes de montage suivantes :
insertion sans contrainte de l'élément radiateur (74) ainsi que de l'élément (81) dissipant de la chaleur dans la partie inférieure de boîtier (8), et
mise sous précontrainte de la structure à couches (80), par insertion d'un déplaceur dans la partie inférieure de boîtier (8).
